# FASCICULE DE BREVET EUROPEEN

(11) **EP 2 070 674 B1**
(45) Date de publication et mention de la délivrance du brevet: **02.02.2011**
(21) Numéro de dépôt: 08171189.7
(22) Date de dépôt: 10.12.2008
(51) Int. Cl.: B29B 17/00, B29B 17/02, B02C 18/06

(54) **Procédé et installation de séparation de produits composites, à base de métal et d'élastomère**
Verfahren und Anlage zur Trennung von Verbundprodukten auf der Basis von Metall und Elastomer
Method and installation for separating composite products made from metal and elastomer

(30) Priorité: 11.12.2007 FR 0759728
(43) Date de publication de la demande: 17.06.2009
(73) Titulaire: Aliapur, 69003 Lyon (FR)
(72) Inventeur: Clauzade, Catherine, 69003 Lyon (FR)
(74) Mandataire: Myon, Gérard Jean-Pierre

(56) Documents cités:
- EP-A- 0 353 541
- DE-A1- 4 417 522
- US-A- 4 726 530
- US-A- 5 524 838
- US-A1- 2003 168 537
- US-B1- 6 387 966

## Description

La présente invention concerne un procédé de séparation de produits composites, à base de métal et d'élastomère, ainsi qu'une installation permettant la mise en oeuvre de ce procédé. Un procédé et une installation selon l'art antérieur sont décrits dans DE-A 4417 522, L'invention vise le traitement de tout produit composite qui comprend, entre autres, des éléments rigides de renfort, qui sont métalliques, ainsi qu'une matrice élastomère, dans laquelle sont noyés ces éléments de renfort. Les exemples typiques de produits formés par de tels matériaux composites sont notamment les pneumatiques, les chenilles pour véhicule, ou encore les tuyaux composites.

Il est connu de traiter les produits précités, en vue de leur recyclage. A cet effet, il s'agit de séparer la fraction métallique par rapport à la fraction d'élastomère, qui sont ensuite valorisées de manière distincte.

A cet effet, il est prévu d'utiliser une succession de broyeurs, dont chacun est pourvu de couteaux de déchiquetage, ainsi que de grilles percées d'orifices. Au fil des différentes étapes, on admet les produits à traiter dans des broyeurs dont les grilles sont percées d'orifices de plus en plus fins.

Il a été constaté que les solutions décrites ci-dessus se révèlent d'une efficacité insuffisante. En d'autres termes, en aval du traitement, on retrouve une fraction substantielle de produits non valorisables, qui comportent à la fois une fraction métallique et une fraction élastomérique.

Ceci étant précisé, l'invention vise à proposer un procédé de séparation, du type décrit ci-dessus, qui présente une efficacité plus importante que dans l'art antérieur, en ce sens qu'il permet de diminuer sensiblement la proportion des produits non valorisables évoqués ci-dessus.

A cet effet, elle a pour objet un procédé de séparation de produits composites qui comprennent des éléments de renfort métalliques, ainsi qu'une matrice en matériau élastomère, dans laquelle sont noyés ces éléments métalliques, procédé dans lequel on soumet ces produits à au moins une phase de broyage au moyen d'organes de déchiquetage coopérant avec une grille présentant des orifices, **caractérisé en ce que** ce procédé comprend en outre une étape supplémentaire de broyage poussé, dans laquelle des organes de déchiquetage coopèrent avec un organe de broyage poussé propre à empêcher tout passage substantiel desdits produits.

Selon d'autres caractéristiques :
- on soumet les produits à des phases successives de broyage au moyen d'organes de déchiquetage coopérant avec des grilles dont les orifices présentent des dimensions de plus en plus petites, au fil des broyages successifs ;
- on réalise ces phases successives de broyage dans des broyeurs distincts, placés en série ;
- on met en communication la sortie d'au moins deux broyeurs parmi ladite série de broyeurs, avec l'entrée d'un broyeur supplémentaire, pourvu dudit organe de broyage poussé ;
- au niveau de la sortie desdits broyeurs mis en communication avec l'entrée du broyeur supplémentaire, on sépare une première fraction de produits, attirée par effet électromagnétique, d'une deuxième fraction de produits, qui n'est pas attirée par cet effet, et on dirige ladite première fraction vers l'entrée du broyeur supplémentaire ;
- on réalise l'étape supplémentaire de broyage poussé en aval de l'étape de broyage mise en oeuvre dans le dernier broyeur appartenant à ladite série de broyeurs, en mettant en communication la sortie de ce dernier broyeur avec l'entrée d'un broyeur supplémentaire, pourvue dudit organe de broyage poussé ;
- on soumet ces produits à une unique phase de broyage au moyen des organes de broyage coopérant avec une grille percée d'orifices, puis on réalise l'étape supplémentaire de broyage poussé ;
- après avoir réalisé l'étape supplémentaire de broyage poussé, on obtient une fraction élastomérique sensiblement pure, et on réalise une étape finale de réglage de la granulométrie de cette fraction élastomérique sensiblement pure ;
- l'organe de broyage poussé est pourvu d'une paroi pleine au voisinage de laquelle se déplacent les organes de déchiquetage ;
- l'organe de broyage poussé est formé par une grille dont les orifices présentent une taille suffisamment petite, afin d'empêcher tout passage substantiel des produits ;
- on fait circuler un fluide réfrigérant, notamment de l'azote liquide, au travers des orifices de la grille formant l'organe de broyage poussé.

L'invention a également pour objet une installation pour la mise en oeuvre du procédé ci-dessus, comprenant au moins un châssis, au moins un jeu d'organes de déchiquetage, ainsi qu'au moins une grille pourvue d'orifices, susceptibles de coopérer avec ce châssis et ces organes de déchiquetage, **caractérisée en ce que** cette installation comprend en outre un organe de broyage poussé susceptible de coopérer avec ce châssis et ces organes de déchiquetage, cet organe de broyage poussé étant apte à empêcher tout passage substantiel des produits.

Selon d'autres caractéristiques :
- cette installation comprend plusieurs grilles pourvues d'orifices, présentant des tailles d'orifices différentes ;
- cette installation comprend plusieurs broyeurs individuels, dont chacun comprend un châssis, un jeu d'organes de déchiquetage, ainsi qu'une unique grille pourvue d'orifices ou un unique organe de broyage poussé ;
- il est prévu un unique châssis, un unique jeu d'organes de déchiquetage, la ou chaque grille pourvue d'orifices et l'organe de broyage poussé étant susceptible d'être fixé(e), de manière amovible, sur ce châssis unique ;
- les produits composites comprennent en outre une phase textile, l'installation étant pourvue de moyens d'aspiration de cette phase textile, qui sont susceptibles d'assurer en outre une fonction de ventilation.

L'invention va être décrite ci-après, en référence aux dessins annexés, donnés uniquement à titre d'exemples non limitatifs, dans lesquels :
- la figure 1 est une vue schématique, illustrant une installation conforme à un premier mode de réalisation de l'invention ;
- la figure 2 est une vue en coupe longitudinale, à bien plus grande échelle, illustrant le passage d'un morceau d'élastomère au travers d'un orifice d'une grille ; et
- les figures 3 et 4 sont des vues schématiques analogues à la figure 1, illustrant deux variantes supplémentaires de réalisation de l'invention.

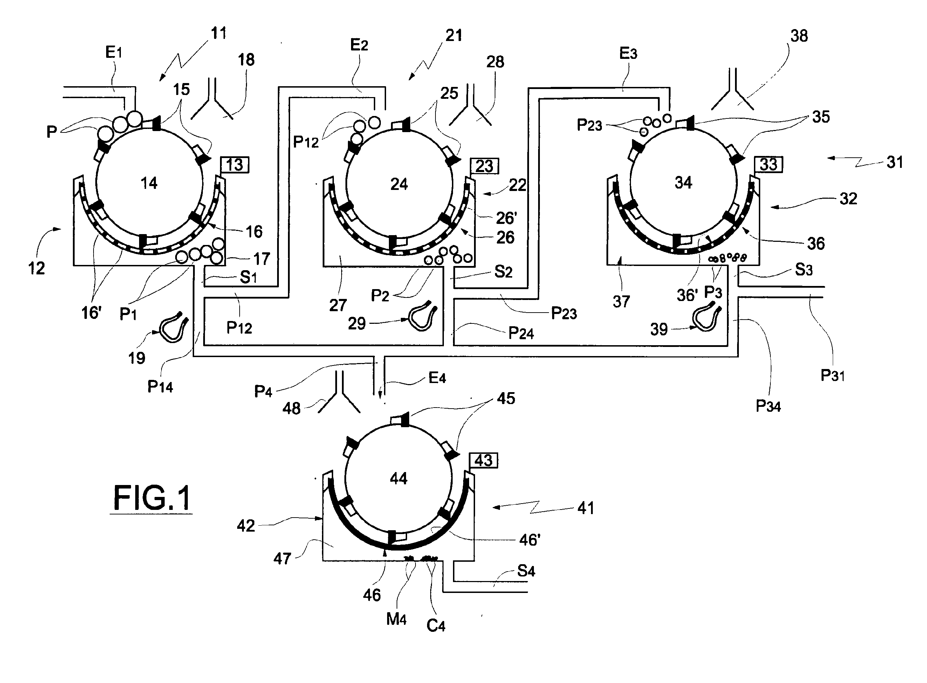

La figure 1 illustre une première variante de réalisation de l'invention, faisant tout d'abord appel à trois broyeurs classiques placés en série, à savoir les uns derrière les autres. Ces trois broyeurs, qui sont affectés des références successives 11, 21 et 31, présentent des structures similaires et sont de type connu en soi.

Chaque broyeur possède un châssis 12, 22, 32, sur lequel est monté un stator 13, 23, 33 propre à mettre en mouvement un rotor 14, 24, 34. De façon habituelle, chaque rotor supporte des organes de déchiquetage, en l'occurrence des couteaux 15, 25, 35, qui coopèrent avec des grilles 16, 26, 36 présentant une forme globalement semi-circulaire, vues de côtés.

Les grilles 16, 26, et 36 sont creusées d'orifices 16', 26' et 36', dont les dimensions sont de plus en plus petites. A titre d'exemple non limitatif, les orifices 16' présentent une section moyenne de 12 à 30 mm, les orifices 26' une section moyenne de 8 à 18 mm, alors que les orifices 36' présentent une section moyenne de2à12mm.

De plus, chaque broyeur 11 à 31 est pourvu d'une entrée E₁, E₂, E₃, de produits à traiter, d'un bac 17, 27, 37 de collecte des produits récupérés au-dessous des grilles, ainsi que d'une sortie S₁, S₂, S₃. Enfin, chaque broyeur est associé à un dispositif d'aspiration 18, 28, 38, susceptible de collecter la phase textile comme on le verra dans ce qui suit. Le dispositif d'aspiration peut en outre assurer une fonction de ventilation, afin de limiter d'éventuels phénomènes d'échauffement.

L'installation conforme à l'invention comprend en outre un broyeur supplémentaire 41, dont certains des éléments mécaniques sont analogues à ceux des broyeurs classiques 11, 21 et 31. Ainsi, ce broyeur supplémentaire 41 comporte un châssis 42, un stator 43, un rotor 44, des couteaux 45, un bac de collecte 47, un dispositif d'aspiration 48, ainsi qu'une entrée E₄, et une sortie S₄. Cependant, contrairement aux trois premiers broyeurs, le broyeur 41 n'est pas équipé d'une grille perforée classique, mais d'un organe dit de broyage poussé, désigné par la référence 46.

Cet organe 46 présente sensiblement la même forme que les grilles 16 à 36, à savoir qu'il est globalement semi-circulaire, vu de côté. Ceci est avantageux, dans la mesure où cet organe peut être adapté sur un châssis classique, tel celui des broyeurs 11 à 31. Cet organe peut également coopérer avec un rotor et des couteaux également de type classique.

Conformément à l'invention, cet organe de broyage poussé 46 est destiné à empêcher sensiblement tout passage de solides. En d'autres termes, contrairement aux grilles classiques, l'action des couteaux 45 ne permet pas aux solides traités de passer au travers de cet organe, de sorte que ces solides subissent continuellement l'action de ces couteaux.

D'un point de vue constructif, cet organe de broyage poussé 46 peut présenter une paroi pleine 46', comme dans l'exemple illustré. Cependant, à titre de variante, cet organe 46 peut être réalisé sous forme d'une grille, dont les orifices sont beaucoup plus petits que ceux utilisés habituellement. Cette variante permet d'empêcher le passage de solides, tout en autorisant le passage d'un fluide au travers des micro-orifices de l'organe de broyage poussé. Un tel fluide, qui est par exemple de l'azote liquide, assure alors une fonction de ventilation afin de limiter les phénomènes d'échauffement.

La mise en oeuvre de l'installation décrite ci-dessus est la suivante. On admet tout d'abord, à l'entrée E₁ du premier broyeur 11, des produits à traiter conformément à l'invention. Il s'agit de manière typique d'éléments issus d'un déchiquetage grossier, dont la taille est en générale comprise entre 30 et 250 mm.

Comme cela a été décrit dans le préambule de la présente description, ces produits peuvent notamment être des pneumatiques, des chenilles, ou encore des tuyaux composites. Dans le présent exemple, on supposera que les produits à traiter sont des fragments de pneumatiques, qui sont sensiblement constitués de trois phases, respectivement métallique, caoutchouteuse et textile. De façon typique, ces produits contiennent une fraction pondérale de 70 à 80 % de caoutchouc, de 10 à 20 % de métal, et de 0 à 10 % de textile.

Ces produits primaires sont affectés de la référence P et sont représentés, de manière schématique, sous forme circulaire. Ils sont alors broyés, de façon classique, par coopération des couteaux 15 et des grilles 16. De façon simultanée, tout ou partie de la phase textile est aspirée par le dispositif 18, puis valorisée de manière séparée.

Dans le bac de collecte 17, on retrouve au terme de cette opération des produits intermédiaires, notés P₁, correspondant au broyage des produits initiaux P. Ces produits P₁, qui sont évacués par la sortie S₁, comprennent à la fois du caoutchouc et du métal, et présentent une taille typique de 10 à 25 mm.

Immédiatement en aval de cette sortie S₁, il est prévu un aimant 19, propre à attirer la fraction des produits P₁, qui présente des parties métalliques extérieures, propres à favoriser une telle attraction électromagnétique. Le flux de produit P₁ est donc divisé en deux flux, respectivement P₁₂ qui est dirigé vers l'entrée E₂ du second broyeur classique 21, ainsi que P₁₄ qui est dirigé vers l'entrée E₄ du broyeur supplémentaire 41. Comme on l'a vu ci-dessus, les produits P₁₄ comprennent des parties métalliques externes, propres à être attirées par l'aimant 19. En revanche, les éventuelles parties métalliques des produits P₁₂ sont internes, de sorte qu'elles ne sont pas attirées par l'aimant.

Les produits P₁₂, admis à l'entrée E₂ du second broyeur 21, sont alors soumis à une autre opération de broyage, de façon analogue à ce qui a été décrit ci-dessus en référence au premier broyeur 11. Durant ce second broyage, une partie supplémentaire de la phase textile est aspirée par le dispositif 28. De plus, les produits P₁₂ sont broyés au travers des orifices 26' de sorte qu'on retrouve, dans le bac 27, des produits P₂ de plus petite taille, à savoir typiquement comprise entre 2 et 8 mm.

Comme dans le cas du premier broyage, on place un aimant 29, immédiatement en aval de la sortie S₂. Dans ces conditions, le flux de produits P₂ est séparé, d'une part, en un flux P₂₃ dirigé vers l'entrée E₃ du broyeur 31 et, d'autre part, en un flux P₂₄ dirigé vers l'entrée E₄ du broyeur supplémentaire 41.

De façon analogue à ce qui a été expliqué ci-dessus pour la sortie du premier broyeur 11, le flux P₂₃ comprend des produits dont les parties métalliques éventuelles sont internes, de sorte qu'elles ne sont pas attirées par l'aimant 29. En revanche, le flux P₂₄ est formé de produits présentant des parties métalliques externes.

Les produits P₂₃ sont alors broyés dans le troisième broyeur classique 31. Ceci conduit à la formation de produits P₃, dont la taille typique est comprise entre 0,5 et 2 mm. Comme précédemment, ces produits P₃ sont séparés en deux flux par un aimant 39, à savoir un premier flux P₃₁ qui est valorisé séparément et, d'autre part, un flux P₃₄ qui est dirigé vers le broyeur supplémentaire 41. Les produits P₃₁ sont constitués de granulats d'élastomère sensiblement pur, alors que les produits P₃₄ comprennent des particules métalliques qui ont été attirées par l'aimant 39.

Les flux respectifs P₁₄, P₂₄ et P₃₄ sont réunis en un flux unique, noté P₄, qui est admis dans le broyeur supplémentaire 41. Comme on l'a vu ci-dessus, ce dernier possède une paroi pleine 46', à savoir dépourvue d'orifice. Dans ces conditions, la coopération des couteaux 45 et de cette paroi pleine 46' conduit au broyage des produits P₄, sans que ces derniers ne passent cependant en aval de cette paroi. Ceci permet de manière surprenante une séparation entre la phase métallique et la phase élastomérique, qui est beaucoup plus poussée que dans un broyeur pourvu d'une grille percée d'orifices, même si ces derniers présentent des dimensions très faibles.

L'homme du métier est à même de réguler différents paramètres, afin de fixer la durée de traitement des produits P₄ dans le broyeur 41. Il s'agit notamment du taux de pureté souhaité par l'utilisateur final, pour les produits élastomériques purs et/ou les produits métalliques purs, ou bien encore de la quantité de produits traités. A titre d'exemple non limitatif, on réalise cette phase supplémentaire de broyage poussé pendant environ 15 minutes.

Au terme de cette opération de broyage poussé, qui s'accompagne de l'aspiration de l'éventuelle phase textile par le dispositif 48, on arrête la rotation des couteaux 45 et on enlève la grille 46. Dans ces conditions, le bac 47 assure la collecte, d'une part, de morceaux d'élastomère C₄, sensiblement purs et, d'autre part, de fils métalliques M₄. Ces deux phases C₄ et M₄, ainsi isolées, sont alors valorisées de manière séparée.

L'invention permet d'atteindre les objectifs précédemment mentionnés.

On notera tout d'abord qu'il est du mérite de la Demanderesse d'avoir identifié que, dans l'état de la technique connu, le manque d'efficacité de la séparation provient en particulier du fait que tous les broyeurs sont équipés de grilles perforées. Ainsi, un exemple typique de l'art antérieur fait intervenir différents broyeurs successifs, tels 11, 21 et 31 de la figure 1, sans bien entendu utiliser le broyeur supplémentaire 41.

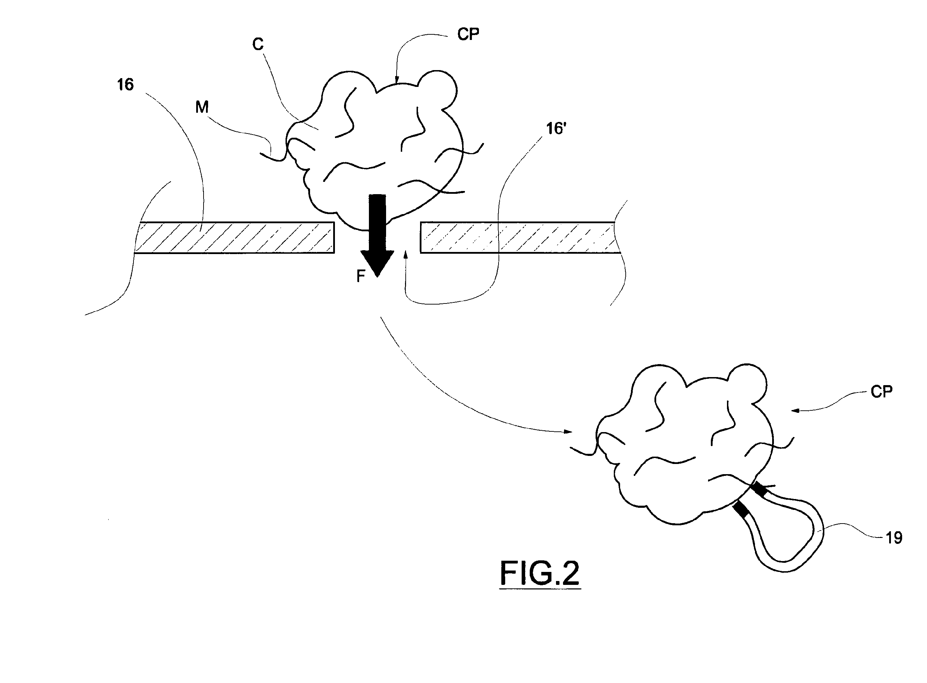

Dans l'état de la technique, au sein de chaque broyeur 11 à 31, les produits sont déchiquetés au travers d'orifices de petite taille tels ceux 16' de la grille 16, comme cela est plus particulièrement illustré sur la figure 2. Il s'agit en réalité de « co-produits », qui sont formés d'une matrice caoutchouteuse C, ainsi que de différents fils métalliques M. Ces co-produits CP présentent une taille plus importante que celle des orifices 16'.

Or, du fait de la nature déformable du caoutchouc, ce dernier est susceptible de passer au travers des orifices 16', selon la flèche F à la figure 2. Ce type de co-produits se retrouve donc en aval de la grille, même si leur taille leur interdit en théorie le passage. Dans ces conditions, ces co-produits sont généralement attirés par un aimant, tel que celui 19.

En d'autres termes, dans l'art antérieur illustré à la figure 2, les fractions respectives de caoutchouc C et de fils métalliques M, présentes dans le co-produit CP, ne peuvent être valorisées de façon séparée, étant donné qu'elles n'ont pas été isolées l'une de l'autre. On conçoit donc clairement que l'état de la technique n'autorise pas une récupération et une valorisation optimales des différentes phases constitutives des produits à traiter.

Au contraire, conformément à l'invention, l'étape de broyage des produits, par coopération des couteaux 45 et de la paroi pleine 46', évite tout passage au travers d'éventuels orifices, ce qui garantit une séparation beaucoup plus poussée entre la phase élastomérique et la phase métallique. Par conséquent, cette meilleure séparation s'accompagne d'une possibilité de valorisation, de ces différentes phases ainsi isolées.

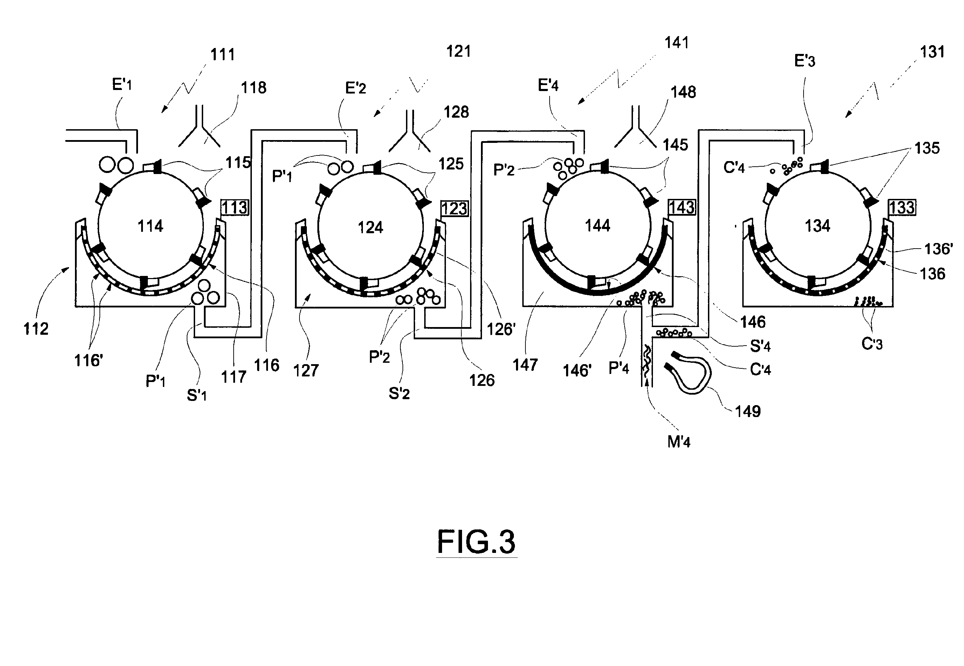

La figure 3 illustre une première variante de la réalisation de l'invention. Sur cette figure 3, les éléments mécaniques analogues à ceux de la figure 1 y sont affectés des mêmes numéros de référence, augmentés de 100.

On retrouve, sur cette figure 3, deux premiers broyeurs de type classique 111 et 121, qui sont placés l'un derrière l'autre, à savoir que la sortie S'₁ du premier broyeur 111 est mise en communication avec l'entrée E'₂ du second broyeur 121. De plus, la sortie S'₂ du second broyeur 121 est mise en communication avec l'entrée E'₄ d'un broyeur supplémentaire 141, conforme à l'invention, dont la sortie S'₄ est elle-même mise en communication avec l'entrée E'₃ d'un troisième broyeur classique 131.

Comme dans le premier mode de réalisation, les trois broyeurs classiques sont équipés de grilles 116, 126 et 136, dont les orifices 116', 126' et 136' présentent des tailles de plus en plus petites, en allant du premier 111 au troisième broyeur 131. Enfin, le broyeur supplémentaire 141 est pourvu d'un organe de broyage poussé 146, muni d'une paroi pleine 146'.

En service, on procède à une première phase de broyage, au sein du broyeur 111, ce qui permet d'obtenir des produits intermédiaires P'₁, de façon analogue à ce qui a été décrit dans le premier mode de réalisation. Cependant, contrairement à ce premier mode, l'ensemble des produits P'₁ est dirigé vers l'entrée E'₂ du second broyeur 121, à savoir qu'aucune séparation n'est opérée à ce stade.

Les produits P'₁ sont ensuite broyés dans le second broyeur classique 121, ce qui conduit à l'obtention de produits P'₂ de plus petite taille. Ces derniers sont alors dirigés dans leur intégralité vers le broyeur supplémentaire 141, sans séparation entre les différents flux. En d'autres termes, les deux premiers broyages, au sein des broyeurs 111 et 121, ont uniquement pour fonction de réduire la taille des produits traités, sans assurer une fonction de séparation entre l'élastomère et le métal. La phase textile éventuelle est aspirée au moyen des dispositifs 118 et 128, comme dans le premier mode de réalisation.

Les produits P'₂ sont alors broyés de façon poussée dans le broyeur 141, comme décrit en référence au premier mode de réalisation, de façon à obtenir des produits P'₄. Au moyen d'un aimant 149, on sépare alors ces produits P'₄ en deux flux en aval de ce broyeur, à savoir d'une part une phase sensiblement métallique M'₄ et, d'autre part, une phase C'₄ sensiblement constituée de caoutchouc. De plus, la phase textile éventuelle est aspirée par le dispositif 148. La phase métallique M'₄ est alors valorisée de manière séparée, alors que la phase élastomérique C'₄ est dirigée vers le troisième broyeur classique 131.

Ce dernier broyeur, qui est optionnel comme cela serait explicité dans ce qui suit, assure une fonction de granulation, mais pas de séparation. En effet, comme vu ci-dessus, il ne reçoit qu'une fraction élastomérique sensiblement pure. Dans ces conditions, les orifices 136', ménagées dans la grille 136, permettent l'obtention de morceaux d'élastomère C'₃ de dimension souhaitée.

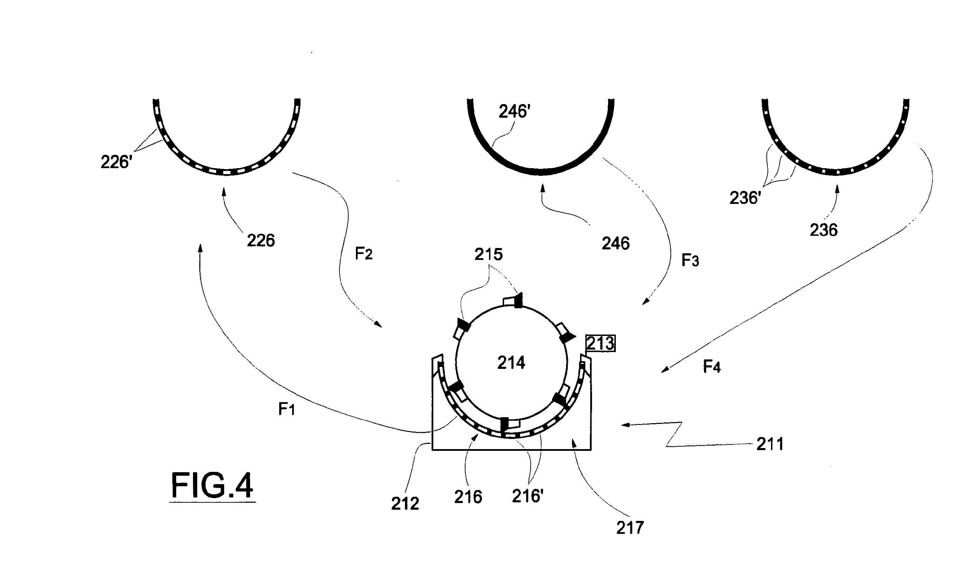

La figure 4 illustre une variante supplémentaire de réalisation de l'invention, dont la mise en oeuvre est proche de celle de la variante illustrée en référence à la figure 3. Ainsi, sur cette figure 4, les éléments mécaniques analogues à ceux de la figure 3 y sont affectés des mêmes numéros de référence, augmentés de 100.

Cette dernière variante fait appel à un unique broyeur 211, qui est globalement analogue à celui 111 de la figure 3. Ainsi, ce broyeur 211 est pourvu d'un châssis 212, d'un stator 213, d'un rotor 214, ainsi que de couteaux 215. Cependant, contrairement aux agencements décrits ci-dessus, ce broyeur 211 est équipé de différentes grilles, susceptibles d'être rapportées de manière amovible sur le châssis 212.

Dans l'exemple, on retrouve ainsi trois grilles 216, 226 et 236, percées d'orifices 216', 226' et 236', dont les dimensions sont par exemple identiques à celles des orifices 16', 26' et 36' du premier mode de réalisation. Le broyeur 211 est enfin propre à coopérer avec un organe de broyage poussé 246, analogue à celui 146 du second mode de réalisation.

La mise en oeuvre de ce troisième mode de réalisation de l'invention s'opère de manière analogue à celle du second mode. Ainsi, on installe tout d'abord la première grille 216, pourvue des orifices 216' les plus grands. On broie alors les particules de plus grandes dimensions, tout en aspirant la phase textile. De la sorte, on recueille, dans le bac de collecte 217, des premiers produits intermédiaires, analogues à ceux P'₁, sans séparation des phases métallique et élastomère.

Puis, on remplace la première grille 216 par celle 226, présentant des orifices de taille intermédiaire (ce qui est matérialisé par les flèches F₁ et F₂). Les produits P'₁ sont alors réintroduits, depuis le bac de collecte 217 vers la surface de travail de cette seconde grille 226. Après mise en oeuvre du broyage, on obtient des produits P'₂, qu'on ne soumet pas à une séparation métal-élastomère.

On remplace alors la seconde grille 226 par l'organe de broyage poussé 246 (flèche F₃), sur la surface de laquelle on dispose les produits P'₂. On procède alors à une phase de broyage supplémentaire, par coopération des couteaux avec la paroi pleine 246'. Comme cela a été expliqué en référence au second mode de réalisation, on obtient alors une séparation sensiblement totale entre la phase métallique pure et la phase élastomérique pure. Cette dernière peut éventuellement subir une phase finale de granulation, au moyen de la grille 236 (flèche F₄), comme cela a été décrit en référence à ce second mode.

L'invention n'est pas limitée aux exemples décrits et représentés.

Ainsi, en référence à la figure 3, on peut prévoir de ne pas effectuer de traitement final de granulométrie. Dans ce cas, le broyeur 141 constitue un broyeur final, en aval duquel sont isolées les phases respectives élastomère et métallique, qui sont valorisées séparément.

Au contraire, en référence à la figure 1, on peut prévoir d'effectuer un traitement final de granulométrie, en aval du broyeur 41. Dans ce cas, la fraction d'élastomère C₄ est admise dans un broyeur aval non représenté, de type classique, afin d'ajuster la granulométrie de cette fraction.

De plus, en référence à la figure 3, on peut prévoir d'utiliser plus de deux broyeurs en série, tels ceux 111 et 121, avant le broyeur supplémentaire 141. Ainsi, on peut par exemple utiliser au moins trois broyeurs classique en série, avant de faire appel à ce broyeur supplémentaire.

On peut enfin prévoir de réaliser une unique étape de broyage de type classique, avant de réaliser une étape de broyage supplémentaire conforme à l'invention, par coopération des couteaux et de la paroi pleine. Dans ce cas, en référence à la figure 3, on réalise par exemple ce broyage unique dans le broyeur 111, dont on place directement la sortie en communication avec le broyeur 141.

## Revendications

1. Procédé de séparation de produits composites (P) qui comprennent des éléments de renfort métalliques, ainsi qu'une matrice en matériau élastomère, dans laquelle sont noyés ces éléments métalliques, procédé dans lequel on soumet ces produits (P) à au moins une phase de broyage au moyen d'organes de déchiquetage (15, 25, 35 ; 115, 125 ; 215) coopérant avec une grille (16, 26, 36 ; 116, 126 ; 216, 226) présentant des orifices (16', 26', 36' ; 116', 126' ; 216', 226'), **caractérisé en ce que** ce procédé comprend en outre une étape supplémentaire de broyage poussé, dans laquelle des organes de déchiquetage (45 ; 215) coopèrent avec un organe de broyage poussé (46, 246) propre à empêcher tout passage substantiel desdits produits (P).

2. Procédé de séparation de produits composites selon la revendication 1, **caractérisé en ce qu'**on soumet les produits à des phases successives de broyage au moyen d'organes de déchiquetage coopérant avec des grilles dont les orifices présentent des dimensions de plus en plus petites, au fil des broyages successifs.

3. Procédé de séparation de produits composites selon la revendication 2, **caractérisé en ce qu'**on réalise ces phases successives de broyage dans des broyeurs distincts (11, 21, 31 ; 111, 121), placés en série.

4. Procédé de séparation de produits composites selon la revendication 3, **caractérisé en ce qu'**on met en communication la sortie d'au moins deux broyeurs (11, 21, 31) parmi ladite série de broyeurs, avec l'entrée d'un broyeur supplémentaire (41), pourvu dudit organe de broyage poussé (46).

5. Procédé de séparation de produits composites selon la revendication 4, **caractérisé en ce que**, au niveau de la sortie desdits broyeurs (11, 21, 31) mis en communication avec l'entrée du broyeur supplémentaire (41), on sépare une première fraction (P₁₄, P₂₄, P₃₄) de produits, attirée par effet électromagnétique, d'une deuxième fraction (P₁₂, P₂₃, P₃₁) de produits, qui n'est pas attirée par cet effet, et on dirige ladite première fraction vers l'entrée du broyeur supplémentaire (41).

6. Procédé de séparation de produits composites selon la revendication 3, **caractérisé en ce qu'**on réalise l'étape supplémentaire de broyage poussé en aval de l'étape de broyage mise en oeuvre dans le dernier broyeur (121) appartenant à ladite série de broyeurs (111, 121), en mettant en communication la sortie de ce dernier broyeur (121) avec l'entrée d'un broyeur supplémentaire (141), pourvue dudit organe de broyage poussé (146).

7. Procédé de séparation de produits composites selon la revendication 1, **caractérisé en ce qu'**on soumet ces produits à une unique phase de broyage au moyen des organes de broyage coopérant avec une grille percée d'orifices, puis on réalise l'étape supplémentaire de broyage poussé.

8. Procédé de séparation de produits composites selon l'une quelconque des revendications précédentes, **caractérisé en ce que**, après avoir réalisé l'étape supplémentaire de broyage poussé, on obtient une fraction élastomérique sensiblement pure (C'₄), et on réalise une étape finale (en 131) de réglage de la granulométrie de cette fraction élastomérique sensiblement pure.

9. Procédé selon l'une quelconque des revendications précédentes, **caractérisé en ce que** l'organe de broyage poussé (46) est pourvu d'une paroi pleine (46') au voisinage de laquelle se déplacent les organes de déchiquetage (45).

10. Procédé selon l'une des revendications 1 à 8, **caractérisé en ce que** l'organe de broyage poussé est formé par une grille dont les orifices présentent une taille suffisamment petite, afin d'empêcher tout passage substantiel des produits.

11. Procédé selon la revendication 10, **caractérisé en ce qu'**on fait circuler un fluide réfrigérant, notamment de l'azote liquide, au travers des orifices de la grille formant l'organe de broyage poussé.

12. Installation pour la mise en oeuvre du procédé selon l'une des revendications précédentes, comprenant au moins un châssis (12, 22, 32 ; 212), au moins un jeu d'organes de déchiquetage (15, 25, 35 ; 215), ainsi qu'au moins une grille (16, 26, 36 ; 216) pourvue d'orifices (16', 26', 36' ; 216'), susceptibles de coopérer avec ce châssis et ces organes de déchiquetage, **caractérisée en ce que** cette installation comprend en outre un organe de broyage poussé (46 ; 246) susceptible de coopérer avec ce châssis et ces organes de déchiquetage, cet organe de broyage poussé étant apte à empêcher tout passage substantiel des produits (P).

13. Installation selon la revendication 12, **caractérisée en ce que** cette installation comprend plusieurs grilles (16, 26, 36 ; 216) pourvues d'orifices (16', 26', 36' ; 216'), présentant des tailles d'orifices différentes.

14. Installation selon la revendication 12 ou 13, **caractérisée en ce que** cette installation comprend plusieurs broyeurs individuels (11, 21, 31, 41), dont chacun comprend un châssis (12, 22, 32, 42), un jeu d'organes de déchiquetage (15, 25, 35, 45), ainsi qu'une unique grille (16, 26, 36), pourvue d'orifices (16', 26', 36) ou un unique organe de broyage poussé (46).

15. Installation selon la revendication 12 ou 13, **caractérisée en ce qu'**il est prévu un unique châssis (212), un unique jeu d'organes de déchiquetage (215), la ou chaque grille (216, 226, 236) pourvue d'orifices et l'organe de broyage poussé (246) étant susceptible d'être fixé(e), de manière amovible, sur ce châssis unique (212).

16. Installation selon l'une quelconque des revendications 12 à 15, **caractérisée en ce que** les produits composites comprennent en outre une phase textile, l'installation étant pourvue de moyens (18, 28, 38, 48) d'aspiration de cette phase textile, qui sont susceptibles d'assurer en outre une fonction de ventilation.

## Claims

1. Method for separating composite products (P) which comprise metal reinforcement elements, and a matrix of elastomer material, in which those metal elements are embedded, in which method those products (P) are subjected to at least one grinding operation using shredding members (15, 25, 35; 115, 125; 215) which co-operate with a grid (16, 26, 36; 116, 126; 216, 226) which has holes (16', 26', 36'; 116', 126'; 216'; 226'), **characterised in that that** method further comprises an additional step of forced grinding, in which shredding members (45; 215) co-operate with a forced grinding member (46, 246) which is capable of preventing any substantial passage of the products (P).

2. Method for separating composite products according to claim 1, **characterised in that** the products are subjected to successive grinding operations using shredding members which co-operate with grids whose holes have dimensions which become smaller in the course of the successive grinding operations.

3. Method for separating composite products according to claim 2, **characterised in that** those successive grinding operations are carried out in separate grinders (11, 21, 31; 111, 121) which are placed in series.

4. Method for separating composite products according to claim 3, **characterised in that** the outlet of at least two grinders (11, 21, 31) from the series of grinders is placed in communication with the inlet of an additional grinder (41) provided with the forced grinding member (46).

5. Method for separating composite products according to claim 4, **characterised in that**, in the region of the outlet of the grinders (11, 21, 31), placed in communication with the inlet of the additional grinder (41), a first fraction (P₁₄, P₂₄, P₃₄) of products attracted by electromagnetic effect is separated from a second fraction (P₁₂, P₂₃, P₃₁) of products which is not attracted by that effect and the first fraction is conveyed towards the inlet of the additional grinder (41).

6. Method for separating composite products according to claim 3, **characterised in that** the additional forced grinding step is carried out downstream of the grinding step carried out in the last grinder (121) belonging to the series of grinders (111, 121), placing the outlet of that last grinder (121) in communication with the inlet of an additional grinder (141) provided with the forced grinding member (146).

7. Method for separating composite products according to claim 1, **characterised in that** those products are subjected to a single grinding operation using grinding members which co-operate with a grid through which holes extend, then the additional step of forced grinding is carried out.

8. Method for separating composite products according to any one of the preceding claims, **characterised in that**, after having carried out the additional step of forced grinding, there is obtained a substantially pure elastomeric fraction (C'₄) and a final step is carried out (at 131) for adjusting the granulometry of that substantially pure elastomeric fraction.

9. Method according to any one of the preceding claims, **characterised in that** the forced grinding member (46) is provided with a solid wall (46') in the region of which the shredding members (45) move.

10. Method according to any one of claims 1 to 8, **characterised in that** the forced grinding member is formed by a grid whose holes are sufficiently small to prevent any substantial passage of products.

11. Method according to claim 10, **characterised in that** a cooling fluid, in particular liquid nitrogen, is caused to flow through the holes of the grid which forms the forced grinding member.

12. Installation for implementing the method according to any one of the preceding claims, comprising at least one stand (12, 22, 32; 212), at least one set of shredding members (15, 25, 35; 215) and at least one grid (16, 26, 36; 216) provided with holes (16', 26', 36'; 216') which are capable of co-operating with that stand and those shredding members, **characterised in that that** installation further comprises a forced grinding member (46; 246) which is capable of co-operating with that stand and those shredding members,
that forced grinding member being capable of preventing any substantial passage of products (P).

13. Installation according to claim 12, **characterised in that that** installation comprises a plurality of grids (16, 26, 36; 216) which are provided with holes (16', 26', 36'; 216') which are of different sizes.

14. Installation according to claim 12 or claim 13, **characterised in that that** installation comprises a plurality of individual grinders (11, 21, 31, 41), each of which comprises a stand (12, 22, 32, 42), a set of shredding members (15, 25, 35, 45) and a single grid (16, 26, 36) provided with holes (16', 26', 36) or a single forced grinding member (46).

15. Installation according to claim 12 or claim 13, **characterised in that** there is provided a single stand (212), a single set of shredding members (215), the or each grid (216, 226, 236) provided with holes and the forced grinding member (246) being capable of being fixed, in a removable manner, to that single stand (212).

16. Installation according to any one of claims 12 to 15, **characterised in that** the composite products further comprise a textile phase, the installation being provided with means (18, 28, 38, 48) for drawing **in that** textile phase, which are capable of further affording a ventilation function.

## Patentansprüche

1. Verfahren zur Trennung von Verbundprodukten (P), die metallische Verstärkungselemente sowie eine Matrix aus Elastomermaterial, in der diese metallischen Elemente eingesenkt sind, umfassen, wobei in dem Verfahren diese Produkte (P) mindestens einer Zerkleinerungsphase mithilfe von Zerstückelungsorganen (15, 25, 35; 115, 125; 215), die mit einem Rost (16, 26, 36; 116, 126; 216, 226) zusammenwirken, die Öffnungen (16', 26', 36'; 116', 126'; 216', 226') aufweisen, unterzogen werden, **dadurch gekennzeichnet, dass** dieses Verfahren außerdem einen zusätzlichen Druckzerkleinerungsschritt umfasst, in dem Zerstückelungsorgane (45; 215) mit einem Druckzerkleinerungsorgan (46, 246) zusammenwirken, das dazu geeignet ist, jeglichen wesentlichen Durchtritt der Produkte (P) zu verhindern.

2. Verfahren zur Trennung von Verbundprodukten nach Anspruch 1,
**dadurch gekennzeichnet, dass** die Produkte aufeinander folgenden Zerkleinerungsphasen mithilfe von Zerstückelungsorganen, die mit Rosten zusammenwirken, deren Öffnungen zunehmend kleinere Abmessungen aufweisen, im Verlauf von aufeinander folgenden Zerkleinerungen unterzogen werden.

3. Verfahren zur Trennung von Verbundprodukten nach Anspruch 2,
**dadurch gekennzeichnet, dass** diese aufeinander folgenden Zerkleinerungsphasen in unterschiedlichen Zerkleinerern (11, 21, 31; 111, 121), die in Reihe angeordnet sind, umgesetzt werden.

4. Verfahren zur Trennung von Verbundprodukten nach Anspruch 3,
**dadurch gekennzeichnet, dass** der Ausgang von mindestens zwei Zerkleinerern (11, 21, 31) aus der Reihe von Zerkleinerern mit dem Eingang eines zusätzlichen Zerkleinerers (41), der mit dem Druckzerkleinerungsorgan (46) ausgestattet ist, verbunden wird.

5. Verfahren zur Trennung von Verbundprodukten nach Anspruch 4,
**dadurch gekennzeichnet, dass** auf der Ebene des Austritts der Zerkleinerer (11, 21, 31), der mit dem Eintritt des zusätzlichen Zerkleinerers (41) verbunden wurde, eine erste Fraktion (P₁₄, P₂₄, P₃₄) der Produkte, die durch eine elektromagnetische Einwirkung angezogen wird, von einer zweiten Fraktion (P₁₂, P₂₃, P₃₁) der Produkte, die nicht durch diese Einwirkung angezogen wird, getrennt wird und die erste Fraktion zum Eintritt des zusätzlichen Zerkleinerers (41) geführt wird.

6. Verfahren zur Trennung von Verbundprodukten nach Anspruch 3,
**dadurch gekennzeichnet, dass** der zusätzliche Druckzerkleinerungsschritt dem Zerkleinerungsschritt nachgeschaltet umgesetzt wird, der in dem letzten Zerkleinerer (121) durchgeführt wird, der zu der Reihe von Zerkleinerern (111, 121) gehört, wobei der Ausgang dieses letzten Zerkleinerers (121) mit dem Eingang eines zusätzlichen Zerkleinerers (141) der mit dem Druckzerkleinerungsorgan (146) ausgestattet ist, verbunden wird.

7. Verfahren zur Trennung von Verbundprodukten nach Anspruch 1,
**dadurch gekennzeichnet, dass** diese Produkte einer einzigen Zerkleinerungsphase mithilfe von Zerkleinerungsorganen, die mit einem Rost zusammenwirken, das von Öffnungen durchdrungen ist, unterzogen werden und dann der zusätzliche Druckzerkleinerungsschritt umgesetzt wird.

8. Verfahren zur Trennung von Verbundprodukten nach einem der vorhergehenden Ansprüche, **dadurch gekennzeichnet, dass**, nachdem der zusätzliche Druckzerkleinerungsschritt umgesetzt wurde, eine im Wesentlichen reine Elastomerfraktion (C'₄) erhalten wird und ein letzter Schritt (bei 131) zur Einstellung der Granulometrie dieser im Wesentlichen reinen Elastomerfraktion umgesetzt wird.

9. Verfahren nach einem der vorhergehenden Ansprüche, **dadurch gekennzeichnet, dass** das Druckzerkleinerungsorgan (46) mit einer massiven Wand (46') ausgestattet ist, in dessen Nähe sich die Zerstückelungsorgane (45) bewegen.

10. Verfahren nach einem der Ansprüche 1 bis 8, **dadurch gekennzeichnet, dass** das Druckzerkleinerungsorgan von einem Rost gebildet wird, dessen Öffnungen eine ausreichend geringe Größe aufweisen, um jeglichen wesentlichen Durchtritt der Produkte zu verhindern.

11. Verfahren nach Anspruch 10, **dadurch gekennzeichnet, dass** eine Kühlflüssigkeit, insbesondere flüssiger Stickstoff, durch die Öffnungen des Rosts, das das Druckzerkleinerungsorgan bildet, zirkulieren lassen wird.

12. Anlage zur Durchführung des Verfahrens nach einem der vorhergehenden Ansprüche, die mindestens ein Gestell (12, 22, 32; 212), mindestens einen Satz von Zerstückelungsorganen (15, 25, 35; 215) sowie mindestens einen Rost (16, 26, 36; 216), der mit Öffnungen (16', 26', 36'; 216') ausgestattet ist, die mit diesem Gestell und diesen Zerstückelungsorganen zusammenwirken können, umfasst, **dadurch gekennzeichnet, dass** diese Anlage außerdem ein Druckzerkleinerungsorgan (46; 246) umfasst, das mit diesem Gestell und diesen Zerstückelungsorganen zusammenwirken kann, wobei das Druckzerkleinerungsorgan dazu fähig ist, jeglichen wesentlichen Durchtritt der Produkte (P) zu verhindern.

13. Anlage nach Anspruch 12, **dadurch gekennzeichnet, dass** diese Anlage mehrere Roste (16, 26, 36; 216) umfasst, die mit Öffnungen (16', 26', 36'; 216') ausgestattet sind, die unterschiedliche Öffnungsgrößen aufweisen.

14. Anlage nach Anspruch 12 oder 13, **dadurch gekennzeichnet, dass** diese Anlage mehrere individuelle Zerkleinerer (11,21,31,41) umfasst, die jeweils ein Gestell (12, 22, 32, 42), einen Satz von Zerstückelungsorganen (15, 25, 35, 45) sowie einen einzigen Rost (16, 26, 36) umfassen, der mit Öffnungen (16', 26', 36') oder einem einzigen Druckzerkleinerungsorgan (46) ausgestattet ist.

15. Anlage nach Anspruch 12 oder 13, **dadurch gekennzeichnet, dass** ein einziges Gestell (212) vorgesehen ist, wobei ein einziger Satz von Zerstückelungsorganen (215), der oder jeder Rost (216, 226, 236), der mit Öffnungen ausgestattet ist, und das Druckzerkleinerungsorgan (246) auf abnehmbare Weise an diesem einzigen Gestell (212) befestigt werden können.

16. Anlage nach einem der Ansprüche 12 bis 15, **dadurch gekennzeichnet, dass** die Verbundprodukte außerdem eine Textilphase umfassen, wobei die Anlage mit Mitteln (18, 28, 38, 48) zum Ansaugen dieser Textilphase ausgestattet ist, die außerdem eine Belüftungsfunktion sicherstellen können.
